# EUROPEAN PATENT APPLICATION

(11) **EP 1 292 081 A2**
(43) Date of publication of application: **12.03.2003**
(21) Application number: 02013889.7
(22) Date of filing: 24.06.2002
(51) Int. Cl.: H04L 29/06

(54) **Presence watcher proxy**

(30) Priority: 24.08.2001 US 939155
(71) Applicant: MOTOROLA, INC., Schaumburg, IL 60196 (US)
(72) Inventor: Hansche, Brian, Gilbert, AZ 85234 (US); Viola, Cindy J., Tempe, AZ 85284 (US); White, Douglas A., Gilbert, AZ 85296 (US)
(74) Representative: McCormack, Derek James

(57) **Abstract**

A presence proxy (40) maintains presence information concerning a number of mobile units (80, 85) user agents (72, 74, 76, 78) and retains the presence information should the requesting user agent (10) be unavailable. Further, presence proxy 40 provides lists of user agents about which a particular user agent (10) is interested in having presence information. Further, presence proxy (40) maintains and minimizes a number of notify messages (126) sent to user agent (10). Lastly, presence proxy (40) maintains information when a user agent (10) loses or drops access (150) to the network (20).

## Description

### Background of the Invention

The present invention pertains to communication networks and more particularly to a method for optimizing message exchanges for presence information.

Presence may mean that a user is there or not there. A user's presence status could be available for family members, or their boss, but do not disturb for the general public. Presence information may also include information about what methods of communication a user is open to or available to. For example, a common wireless phone may be available only for voice calls, whereas an office communication system maybe available for voice, text messages or even video capability.

Presence information is currently implemented in the various instant messenger technologies. It allows entities or users to maintain a passive check on the communication status of other entities or users with whom they may wish to communicate. With the development of session initiation protocol (SIP), the SIP protocol provides a means to communicate presence information. Typically when a user wishes to make its presence known in a network, the user or user agent sends a register message to the network using a SIP message.

The user's presence information may then be transmitted throughout the network as applicable or needed.

Accordingly, what is needed is an efficient method for obtaining, collecting and transmitting presence information throughout a communication network.

### Brief Description of the Drawing

FIG. 1 is a block diagram of a communication network in accordance with the present invention.
FIG. 2 is a message flow chart pertaining to the block diagram of FIG. 1 in accordance with the present invention.
FIG. 3 is a block diagram of a communication network with consolidated notification message in accordance with the present invention.
FIG. 4 is a message flow chart of the communication network of FIG. 3 in accordance with the present invention.
FIG. 5 is a block diagram of a communication network depicting stored list notification messages in accordance with the present invention.
FIG. 6 is a message flow chart of the communication network of FIG. 5 in accordance with the present invention.
FIG. 7 is a block diagram of a communication network in which connection is lost in accordance with the present invention.
FIG. 8 is a message flow diagram of the communication network of FIG. 7 in accordance with the present invention.

### Description of the Preferred Embodiment

Presence information is defined in very broad terms these days. It includes not only things like on/off hook but it includes different statuses that a user chooses to advertise. Presence information can be customized so that someone can define their presence dependent upon who is asking. For example, a user's status could be available for family members or their boss but "do not disturb" for the general public.

Presence information may also include information about what methods of communication a user is capable of using. For example, voice only, text messaging, video capabilities, etc. For 3G wireless networks presence information is defined as follows. A logical model of the presence information consists of an arbitrary number of elements. Each such element may contain information as:
Status, which may consist of values such as open, closed, online, offline, busy, away, do not disturb, etc.;
Communication address, which may consist of a communication means (example service type or types, media type of types, multimedia/instant messaging service, etc.) and a contact address; and
Other presence information.

The present invention pertains to a presence information proxy which provides for the following functions:
The presence information proxy allows a user agent of a watching entity to provide a single subscription request for a list of entities (buddies);
The presence information proxy can consolidate presence information about multiple entities in reply to a user agent; and
The presence proxy can retain presence information about multiple entities on behalf of a watcher's user agent even when that watcher's user agent is not available to receive the information (such as in a loss of connection situation). This permits the presence proxy to deliver retained presence information to the watcher without the need to request it again from other entities.

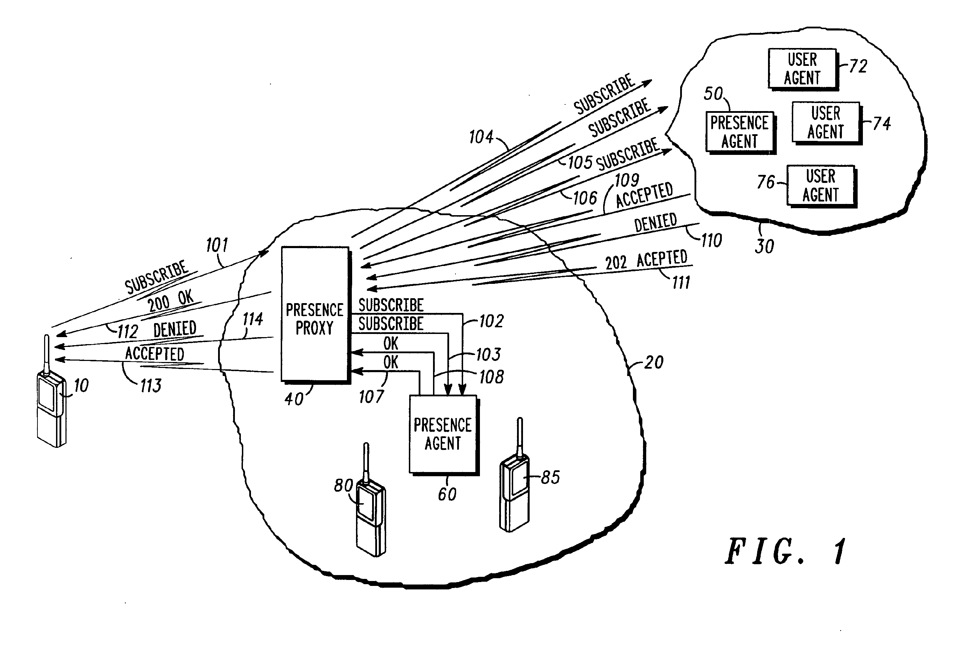

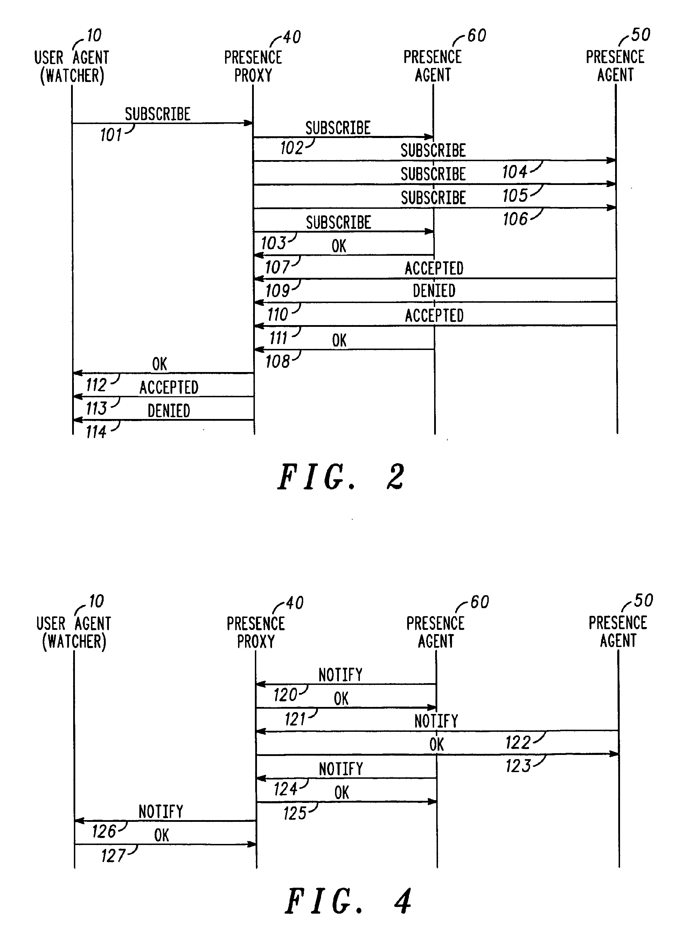

Referring now to FIG. 1, a communication network is shown. Presence information allows users to maintain passive checks on the communication state of other users or entities with whom they may wish to communicate (e.g., a buddy list). Session initiation protocol (SIP) provides a means to communicate presence information. Mobile station (user agent) 10 transmits a subscribe request through wireless network 20 to presence proxy 40. The subscribe request 101 enumerates a list of buddies (1-5) about which mobile station 10 desires presence information. Buddies 1-5 comprise mobile station 80, user agents 72, 74, and 76 and mobile station 85 respectively. Presence proxy 40 then transmits two subscribe requests 102 and 103 to presence agent 60. Subscribe request 102 is a request for presence information concerning mobile station 80 or buddy 1 and subscribe request 103 is a request for presence information concerning mobile station 85, buddy 5. See also FIG. 2.

Next, presence proxy 40 transmits subscribe requests 104 105 and 106 to presence agent 50 which is part of the internet protocol network 30.

Presence agent 50 maintains the presence of user agent 72, 74 and 76. Presence agent 50 is aware of the status of each of the user agents 72, 74 and 76. For example, the status of user agents 72 and 76 would be open to communication and the status of user agent 74 would be access as denied. Presence agent 50 transfers message 109 to presence proxy 40 which indicates that user agent 72 (buddy 2) has accepted communication. Presence agent 50 also transmits message 110 to presence proxy 40 which indicates that user agent 74 has denied acceptance of the communication. Similarly, presence agent 50 transmits message 111 to presence proxy 40 which indicates that user agent 76 has accepted the communication and is providing the appropriate presence information. Presence agents may respond to subscribe messages with either ok, accept, or denied messages.

Presence agent 60 maintains the presence state of mobile stations 80 and 85. Presence agent 60 transfers messages 107 and 108 to presence proxy 40 which indicate that mobile stations 80 and 85 are open and will provide presence status.

Next, presence proxy 40 transmits message 112 to mobile station 10. Message 112 indicates that both buddies 1 and 5 (mobile stations 80 and 85) are in an open status. Similarly, presence proxy 40 transmits message 113 to user agent 10 which indicates that buddies 2 and 4 (user agents 72 and 76) have accepted the communication. Lastly, presence proxy 40 transmits message 114 which indicates that buddy 3 (user agent 74) has denied communication. The mobile station or user agent 10 has received the presence information of each of the buddies some being internet protocol subscribers and some being other mobile stations. The mobile station 10 was able to request presence information using a single message and received one or more messages containing consolidated responses. This reduces the communication between the presence proxy 40 and the user agent 10 since message overhead is reduced. When user agent 10 is a mobile station with an air interface connection to the presence proxy, this reduction in overhead is a significant savings in bandwidth for the wireless network.

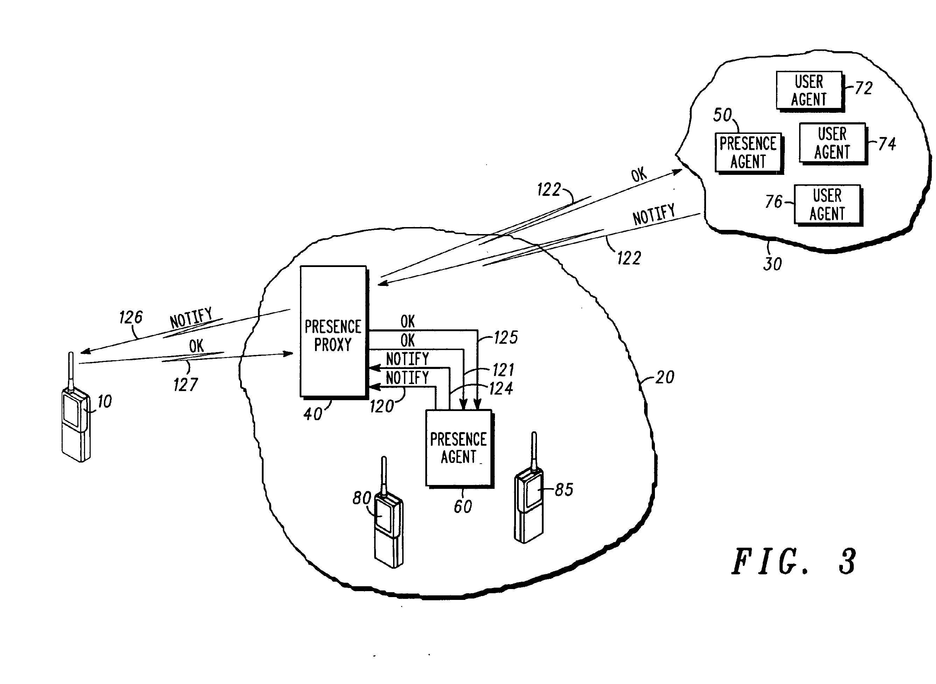

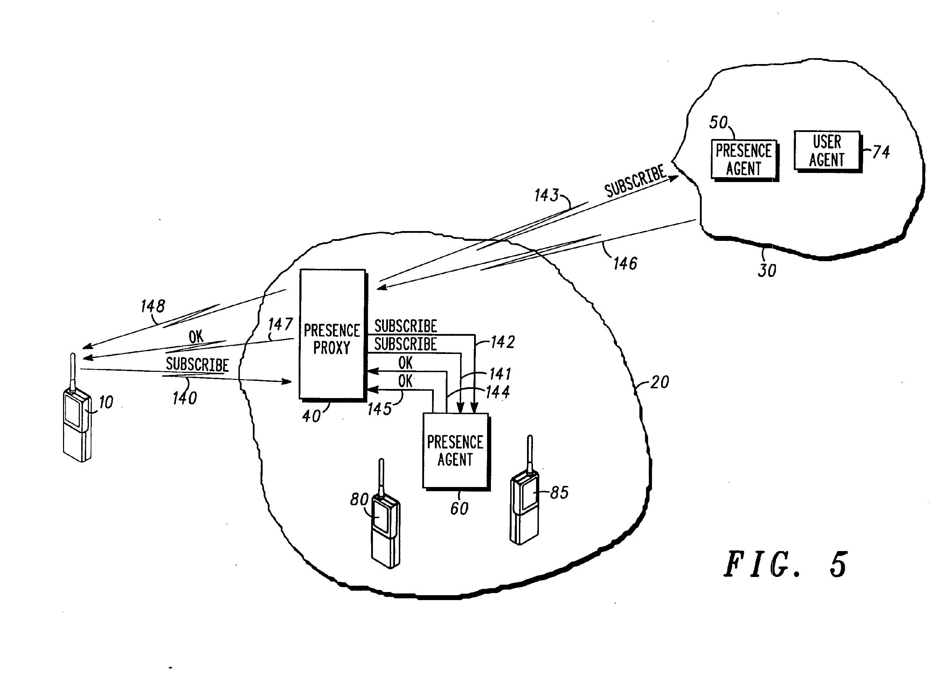

FIGs. 3 and 4 depict a similar scenario to FIGs. 1 and 2, except that messages involved in FIGs. 3 and 4 are notifications that occur after the initial subscription scenario has completed. FIG. 3 is a block diagram of a communication network similar to FIG. 1 while FIG. 4 is a message flow chart embodying the message flow of FIG. 3. Instead of the presence proxy 40 transmitting each of the notify messages 112, 113 and 114 back to user agent 10, presence proxy 14 performs a message consolidation of the notify messages and transmits a single message back to user agent 10. As a prerequisite for the operation of FIGS. 3 and 4, it is assumed that all the messages from 101 through 114 have been sent in a similar fashion as was shown in FIG. 2.

The various presence agents 50 and 60 of FIG. 3 will notify the presence proxy 40 when the state of a buddy has changed. Presence proxy 40 consolidates these individual notify messages into a single message as explained below. In response to the previously sent subscribe request, Presence agent 60 would, for example, transmit a notify message 120 to presence proxy 40 which indicates that buddy 1 is away from his mobile station 80. In response, presence proxy 40 would transmit an ok message 121 which is an acknowledgment back to presence agent 60. Next, for example, present agent 50 transmits a notify message 122 to presence proxy 40. This notify message 122 indicates that user agent 72 has closed his internet device (computer) and is no longer receiving or transmitting. In response, presence proxy 40 transmits another ok message 123 to presence agent 50 which acknowledges notify message 122.

Then, for example, presence agent 60 transmits a notify message 124 to presence proxy 40. This message indicates that buddy 5, mobile station 85, is open for communication.

Presence proxy 40 responds with another ok or acknowledge message 125 to presence agent 60.

Presence proxy 40 then consolidates the individual notify messages 120, 122 and 124 into a single notify message 126. In this example, presence proxy 40 has determined that it is time to send a consolidated notify message 126 to user agent 10 based on a timeout or another equivalent mechanism. Presence proxy 40 then transmits notify message 126 to user agent 10. Notify message 126 includes the status that buddy 1, mobile unit 80, was away from the mobile unit; buddy 2, user agent 72 was closed for communication; and buddy 5, mobile unit 85, was open for communication. User agent 10 then responds by transmitting an ok or acknowledge message 127 to presence proxy 40.

As can be seen from FIG. 4, only one notify message 126 is returned to user agent 10 whereas in FIG. 2, three notification messages were transmitted, 112 through 114. As a result, the valuable air time required was cut by two-thirds from the scenario of FIG 2.

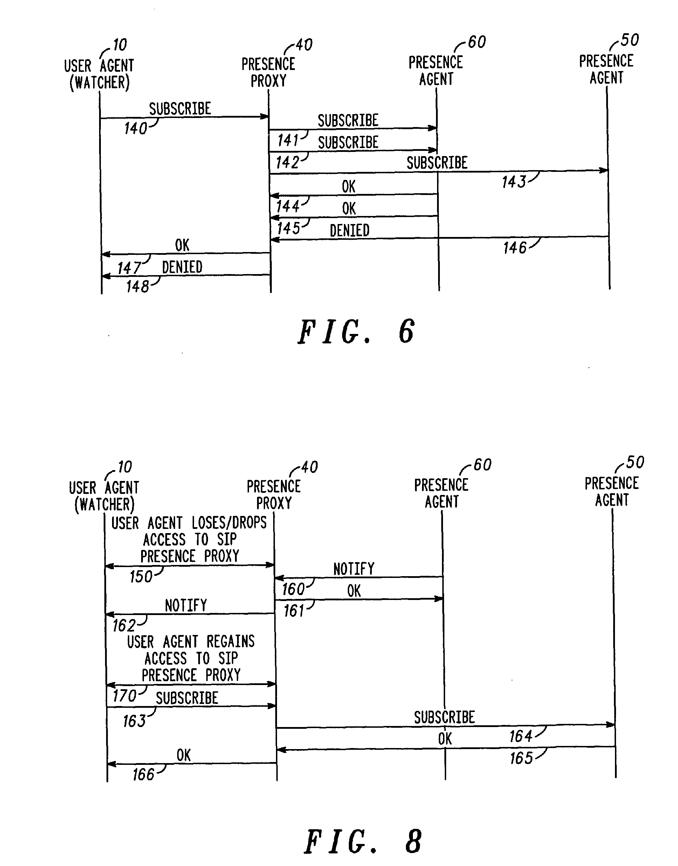

The scenario of FIGs. 5 and 6 is a list subscription whereby the presence proxy 40 keeps a list of the buddies for user agent 10, for example. User agent 10 transmits a subscribe message 140 to presence proxy 40. Presence proxy 40 keeps a list of user agent 10 buddies for the list of buddies indicated by the subscribe message 140. Presence proxy 40 determines that the buddies at mobile stations 80 and 85 and user agent 74 are to be contacted for their presence information.

Presence proxy 40 then generates a subscribe message 141 and transmits this message to presence agent 60 which maintains mobile unit 80 (buddy 1). Further, presence proxy transmits subscribe message 142 to presence agent 60 for obtaining presence information about mobile station 85(buddy 2). Lastly, presence proxy 40 generates subscribe message 143 and transmits it to presence agent 50 through internet network 30. As a result, one subscribe message by user agent 10 has produced several subscribe messages 141-143, each transmitted to the appropriate presence agent for maintaining the particular user agent or buddy.

Presence agent 60 in response to subscribe message 141 transmits ok message 144 to presence proxy 40 which indicates that mobile station 80 is open. Similarly, in response to subscribe message 142, presence agent 60 transmits ok message 145 to presence proxy 40 which indicates that mobile unit 85 or buddy 2 is open. Next, presence agent 50 transmits through the internet network 30 message 146 to presence proxy 40. Message 146 indicates that access to buddy 2 user agent 74 is denied.

Presence proxy 40 then transmits ok message 147 which indicates that mobile units 80 and 85 are open for communication to user agent 10. Presence proxy 40 then also transmits message 148 to user agent 10. Message 148 indicates that access to user agent 74 is denied.

As can be seen, a single subscribe request by user agent 10 has generated multiple subscribe messages according to a predefined buddy list stored within presence proxy 40. Mobile station 10 may have several such stored lists and select from a number of them.

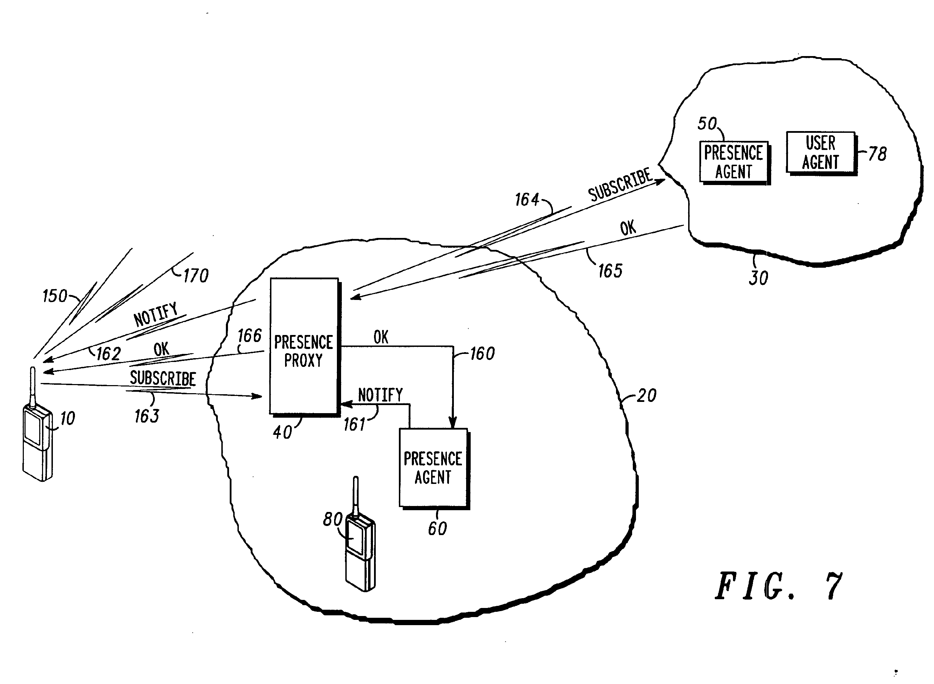

The scenario of FIGs. 7 and 8 is that user agent 10 is losing connection to the network as in the case of a wireless network such as network 20 where mobile unit 10 may periodically lose connections. As a prerequisite to the scenario figures, FIGs. 7 and 8, it is assumed that user agent 10 has previously requested a presence subscription that included mobile station 80 (buddy 1) and received a response that he will be provided with presence information.

User agent 10 loses or drops access 150 to SIP presence proxy 40. Notify message 160 concerning the open status of mobile unit 80 is transmitted from presence agent 60 to presence proxy 40. An ok acknowledge message 161 is transmitted back to presence agent 60 from presence proxy 40.

Next, presence proxy 40 transmits a notify message 162 to user agent 10 indicating that mobile unit 80 has an open status for communication. However, user agent 10 has lost his connection 150 to presence proxy 40. In this case, since the connection between presence proxy 40 and the user agent 10 has been lost 150, no ok message is received back by presence proxy 40.

At some point user agent 10 is again able to communicate 170 with presence proxy 40. When communication is restored 170, user agent 10 renews its request for subscriptions and includes an additional request for presence subscription to a new buddy, user agent 78. An alternative would be for the presence proxy to detect the loss and re-establishment of communication and then deliver updated presence information to the user agent. As a result, subscribe message 163 is transmitted by user agent 10 to presence proxy 40.

Presence proxy 40 then transmits subscribe message 164 to presence agent 50 for the status of user agent 78 (the new buddy). Presence agent 50 responds with an ok message 165 that indicates that user agent 78 is open for communication. Presence proxy 40 then transmits an ok message 166 indicating that the status of mobile unit 80 and user agent 78 is open for communication.

When presence proxy 40 does not receive an acknowledge from a previously sent notify message, presence proxy 40 stores the status of the notify message so that it may be retransmitted when communication is again reestablished with the user agent 10. This not only prevents the loss of presence information which has been requested by user agent 10 but also minimizes the message responses received by user agent 10 and minimizes the messaging sent to presence agents to renew subscriptions and gather presence information when communication is restored to user agent 10.

As can be seen from the above explanation, the present invention maintains presence information of buddies even when a user agent is not reachable. In addition, the present invention optimizes the air interface in that it consolidates presence information from multiple sources; it permits a user to specify a list of users in a subscribe message; and it permits a user to issue a subscribe message to predefined lists of users. In addition, the present invention also optimizes messaging in non-wireless networks and its use is not limited to a wireless environment.

Although the preferred embodiment of the invention has been illustrated, and that form described in detail, it will be readily apparent to those skilled in the art that various modifications may be made therein without departing from the spirit of the present invention or from the scope of the appended claims.

## Claims

1. A method for obtaining presence information by a first user (10) through a first network (20), the method comprising the steps of:
transmitting (101) by the first user a subscribe message for presence information of a second user to a presence proxy (40);
transmitting (104) by the presence proxy the subscribe message to a presence agent (40), the presence agent related to the second user; and
transmitting (80) by the presence agent the presence information to the presence proxy.

2. The method for obtaining presence information as claimed in claim 1, wherein there is further included the step of transmitting (126) by the presence proxy the presence information to the first user.

3. The method for obtaining presence information as claimed in claim 1, wherein there is further included the steps of:
storing by the presence proxy the presence information; and
transmitting (126) the stored presence information to the first user at a later time.

4. The method for obtaining presence information as claimed in claim 1, wherein the step of transmitting by a first user a subscribe message for presence information of a second user includes the step of transmitting (102) by the first user the subscribe message for presence information of a plurality of second users, at least one of said plurality of second users being located in a second network.

5. The method for obtaining presence information as claimed in claim 4, wherein the step of transmitting (112-114) by the presence proxy the presence information to the first user further includes the step of transmitting by the presence proxy a plurality of response messages to the first user, each of the plurality of response messages including presence information of one of the plurality of second users.

6. A method for obtaining presence information by a first user through a first network, the method comprising the steps of:
transmitting (122) by a presence agent a notify message to a presence proxy, the notify message including presence information of a second user;
transmitting (126) the notify message by the presence proxy to the first user; and
storing (127) the presence information of the second user by the presence proxy, if the presence proxy fails to receive (127) an acknowledgment message from the first user.

7. The method for obtaining presence information as claimed in claim 16 wherein there is further included a step of regaining (170) access by the first user to the presence proxy through the first network.

8. The method for obtaining presence information as claimed in claim 17 wherein there is further included the step of transmitting (163) a subscribe message by the first user, the subscribe message including a request for presence information of a third user.

9. The method for obtaining presence information as claimed in claim 18 wherein there is further included the steps of:
responsive to the step of transmitting a subscribe message for presence information of the third user, transmitting (164) by the presence proxy a subscribe message for presence information of the third user to a presence agent; and
transmitting (165) by the presence agent a response message to the presence proxy, the response message including the presence information of he third user.

10. The method for obtaining presence information as claimed in claim 19 wherein there is further included the step of transmitting (166) by the presence proxy to the first user the presence information of the third user and the presence information of the second user.
